(19) Europäisches Patentamt
European Patent Office
Office européen des brevets

(11) **EP 0 582 070 B1**

(12) **EUROPÄISCHE PATENTSCHRIFT**

(45) Veröffentlichungstag und Bekanntmachung des Hinweises auf die Patenterteilung:
**05.11.1997 Patentblatt 1997/45**

(51) Int. Cl.$^6$: **C03B 37/014**, C03B 19/14, C03B 32/00

(21) Anmeldenummer: **93109594.7**

(22) Anmeldetag: **16.06.1993**

(54) **Verfahren zur Herstellung von dotiertem Glas**

Process of making doped glass

Procédé de fabrication de verre dopé

(84) Benannte Vertragsstaaten:
**DE FR GB IT NL**

(30) Priorität: **03.08.1992 DE 4225654**

(43) Veröffentlichungstag der Anmeldung:
**09.02.1994 Patentblatt 1994/06**

(73) Patentinhaber:
**Heraeus Quarzglas GmbH**
**D-63405 Hanau (DE)**

(72) Erfinder:
• **Kirchhof, Johannes, Dr.**
**O-6900 Jena (DE)**
• **Unger, Sonja, Dr.**
**O-6900 Jena (DE)**
• **Schultz, P.C., Dr.**
**Atlanta, GA 30305 (US)**
• **Grezesik, Ulrich, Dr.**
**D-6464 Linsengericht (DE)**
• **Fabian, Heinz**
**D-6450 Hanau 7 (DE)**

(74) Vertreter: **Kühn, Hans-Christian**
**Heraeus Holding GmbH,**
**Stabsstelle Schutzrechte,**
**Heraeusstrasse 12-14**
**63450 Hanau (DE)**

(56) Entgegenhaltungen:
**EP-A- 0 222 501          EP-A- 0 547 335**

• **PATENT ABSTRACTS OF JAPAN vol. 16, no. 249 (C-948)8. Juni 1992 & JP-A-04 055 333 (FURUKAWA ELECTRIC CO.LTD.) 24. Februar 1992**
• **PATENT ABSTRACTS OF JAPAN vol. 16, no. 518 (C-999)26. Oktober 1992 & JP-A-04 193 727 (FURUKAWA ELECTRIC CO.LTD.) 13. Juli 1992**
• **PATENT ABSTRACTS OF JAPAN vol. 11, no. 290 (C-447)18. September 1987& JP-A-62 083 323 (SUMITOMO ELECTRIC IND.LTD.) 16. April 1987**
• **PATENT ABSTRACTS OF JAPAN vol. 12, no. 391 (C-537)18. Oktober 1988 & JP-A-63 139 026 (FURUKAWA ELECTRIC CO.LTD.) 10. Juni 1988**
• **PATENT ABSTRACTS OF JAPAN vol. 10, no. 203 (C-360)16. Juli 1986 & JP-A-61 044 725 (FURUKAWA ELECTRIC CO.LTD.) 4. März 1986**
• **PATENT ABSTRACTS OF JAPAN vol. 10, no. 98 (C-339)15. April 1986 & JP-A-60 231 435 (SHOWA ELECTRIC WIRE CO. LTD.) 18. November 1985**

**Beschreibung**

Die Erfindung betrifft ein Verfahren zur Herstellung von Glas, insbesondere Quarzglas, das mit mehreren, seinen Brechungsindex unterschiedlich verändernden Dotierstoffen dotiert ist, wobei ein erster Dotierstoff bei der Herstellung eines wenigstens im zu dotierenden Bereich porösen, $SiO_2$-haltigen Vorprodukt des Glases eingebracht und danach das den ersten Dotierstoff enthaltende Vorprodukt in einer, einer weiteren Dotierstoff enthaltenden Atmosphäre erhitzt wird, in der von den im chemischen Gleichgewicht zwischen dem Vorprodukt und der Atmosphäre bei der Erhitzungstemperatur vorhandenen gasförmigen Komponenten ein Reaktionsprodukt mindestens des ersten und des weiteren Dotierstoffes und eine den weiteren aber nicht den ersten Dotierstoff enthaltende Dotierungs-Komponente enthalten sind, wobei als weiterer Dotierstoff Fluor eingesetzt wird, und wobei das Vorprodukt zu dem Glas gesintert wird.

Während der Herstellung von synthetischem Glas, insbesondere von synthetischem Quarzglas, können Dotierstoffe in das Glas eingebracht werden, mit deren Hilfe sich die chemischen, optischen oder mechanischen Eigenschaften des Glases beeinflussen lassen.

Für die Herstellung von optischen Bauteilen, wie zum Beispiel Vorformen für Lichtwellenleiter, bei denen die Brechzahl des Kernmaterials größer sein muß als die des Mantelmaterials, ist es wichtig, daß Dotierstoffe in einer vorgebbaren Konzentration und Verteilung in dem Bauteil vorhanden sind. Häufig ist es wünschenswert, eine möglichst hohe Brechzahldifferenz zwischen dem Kernmaterial und dem Mantelmaterial einzustellen. Hierzu können sowohl das Kernmaterial, als auch das Mantelmaterial dotiert sein. Zur Absenkung der Brechzahl sind Dotanden wie Bor und Fluor geeignet. Eine Erhöhung der Brechzahl wird zum Beispiel durch Dotieren mit Germanium oder Titan erreicht. Es ist auch bekannt, das Kernmaterial oder das Mantelmaterial mit mehreren, verschiedenen Dotierstoffen gleichzeitig zu dotieren. Dabei können jedoch Wechselwirkungen zwischen den verschiedenen Dotierstoffen auftreten, die die Einstellung der gewünschten Dotierstoffkonzentration- und Verteilung erschweren.

Aus der japanischen Offenlegungsschrift JP-A-62-202833 ist ein Verfahren zur Herstellung von Ausgangsmaterial für optische Fasern aus Quarzglas bekannt, bei dem zunächst auf einem $SiO_2$-Kernglas eine poröse Schicht aus $SiO_2$, das mit Fluor und mit Bor dotiert ist, mittels der bekannten Soot-Technik abgeschieden wird. In einem anschließenden Verfahrensschritt wird der so hergestellte Ausgangs-Körper in einer fluorhaltigen Atmosphäre erhitzt und gesintert und dessen poröse Bereiche dabei weiter mit Fluor dotiert. Beim Sintern reagiert jedoch das in den porösen Bereichen des Ausgangs-Körpers enthaltene Bor, bzw. $B_2O_3$, mit dem in der Atmosphäre und im porösen Bereich des Ausgangs-Körpers vorhandenen Fluor, bzw. den dort vorhandenen Fluorverbindungen. Dabei bildet sich ein gasförmiges Reaktionsprodukt, nämlich $BF_3$, das aus dem Ausgangsmaterial entweicht. Dadurch ist es mit dem bekannten Verfahren zwar möglich, Vorformen für optische Fasern herzustellen, deren Mantelglas mit Fluor und Bor dotiert ist, allerdings wird durch die nachträgliche Dotierung in fluorhaltiger Atmosphäre eine oberflächliche Auslaugung des Bor-Gehaltes verursacht, die von der Oberfläche ausgehend um so weiter fortschreitet, je länger das Sintern in der fluorhaltigen Atmosphäre andauert. Dabei wird das Maß der Auslaugung beispielsweise auch durch die Konzentrationen an fluorhaltigen Komponenten in der Gasphase und die Temperatur während des Erhitzens in der fluorhaltigen Atmosphäre bestimmt. Aufgrund der Auslaugung des einen Dotierstoffes, nämlich Bor, ist es mit dem bekannten Verfahren nicht möglich, zwischen dem mit Fluor und Bor dotiertem Mantelglas und dem undotierten $SiO_2$-Kernglas eine hohe Brechzahldifferenz zu erzielen.

Ein gattungsgemäßes Verfahren ist aus Patent Abstracts of Japan, Vol. 16, No. 249 (C-948), 8. Juni 1992 (JP-A-04-055333) bekannt, bei dem ein mit Bor dotiertes, poröses Vorprodukt mit einer vorgegebenen Geschwindigkeit in einen Sinterofen eingeführt und dabei zusätzlich mit Fluor dotiert wird. Hierzu enthält die Sinterofen-Atmosphäre ein Gasgemisch aus $SiF_4$ und $BCl_3$. Der Ofenatmosphäre wird die Komponente $BCl_3$ zugeführt, um die Auslaugung von Bor zu verhindern. Dieser Zusammenhang ergibt sich aus der folgenden Reaktionsgleichung:

$$\text{"4 } BCl_3 + 3\ SiF_4 + 6\ H_2O\ (\text{im Sootkörper}) \rightarrow 4\ BF_3 + 3\ SiO_2 + 12\ HCl$$

Demgemäß bildet sich $BF_3$ durch die Reaktion der borhaltigen Komponente mit $SiF_4$. Dabei fällt jedoch $SiO_2$ als Feststoff an und wird dadurch dem chemischen Gleichgewicht fortlaufend entzogen. Das bedeutet, das chemische Gleichgewicht wird zur Seite der Reaktionsprodukte hin verschoben. Daraus ergibt sich, daß ein Großteil des $SiF_4$, also der eigentlich für die Fluor-Dotierung gedachten Komponente, zu $BF_3$ umgesetzt wird, das in der Gasphase der Ofenatmosphäre verbleibt.

Aus Patent Abstracts of Japan, Vol. 12, No. 391 (C-537), 18. Oktober 1988 (JP-A-63-139026) ist ein Verfahren für die Fluor-Dotierung eines porösen $SiO_2$-Körpers während des Verglasens bekannt. Hierzu wird der poröse Glaskörper in einem Sinterofen erhitzt, in den eine Gasmischung eingeleitet wird, die mindestens ein Inertgas, ein Fluorosilan und $BF_3$ enthält.

Ein Verfahren zur Herstellung von Fluor- und Bor-dotierten Quarzglasrohren, das im Sinne von Art. 54 (3) und (4) EPÜ für die vorliegende Anmeldung als Stand der Technik gilt, ist aus der EP-A2-0 547 335 bekannt. Hierzu wird ein poröses, mit $B_2O_3$-dotiertes Rohr in einer Fluor-haltigen Atmosphäre erhitzt. Die Temperatur ist dabei ausreichend hoch, um eine Zersetzung des Fluor-haltigen Gases und dadurch eine Fluor-Dotierung des porösen Glas-Materials zu bewirken. Gleichzeitig wird der Ofenatmosphäre $BF_3$ zugesetzt, um ein Ausbleichen des $B_2O_3$ durch die Reaktion mit Fluor zu verhindern. Anschließend wird das Rohr in fluorhaltiger Atmosphäre verglast.

Der vorliegenden Erfindung liegt die Aufgabe zugrunde, ein Verfahren zur Herstellung eines mit Phosphor und Fluor bzw. Germanium und Fluor dotierten Glases anzugeben, wobei die Art und Konzentration der Dotierstoffe im Glas in weiten Grenzen variierbar und gezielt beeinflußbar ist.

Ausgehend von dem Verfahren gemäß der angegebenen Gattung wird die Aufgabe erfindungsgemäß dadurch gelöst, daß als erster Dotierstoff Phosphor oder Germanium eingesetzt und der Atmosphäre im erstgenannten Fall $SiF_4$ und $PF_5$ und im zweitgenannten Fall $SiF_4$ und $GeF_4$ zugeführt werden und darin in vorgebbaren Konzentrationen enthalten sind.

Bei der Erhitzung des Vorprodukts in der dotierstoffhaltigen Atmosphäre finden zwischen den Bestandteilen des porösen Bereichs des Vorprodukts, wie beispielsweise dem ersten und dem weiteren Dotierstoff sowie möglichen weiteren Dotierstoffen, und den Bestandteilen der Atmosphäre, die im Kontakt mit dem porösen Bereich des Vorprodukts steht, Wechselwirkungen statt. Dabei können chemische Reaktionen ablaufen, die zu Veränderungen der Ausgangs-Konzentrationen der an den Reaktionen teilnehmenden Reaktanten führen. In einer geschlossenen Atmosphäre bildet sich bei den dabei ablaufenden reversiblen Reaktionen ein für die Erhitzungstemperatur charakteristisches dynamisches Gleichgewicht aus, im dem die Reaktanten und die bei den Reaktionen gebildeten Reaktionsprodukte in bestimmten, aufgrund thermodynamischer Energiedaten vorgegebenen Gleichgewichtskonzentrationen vorliegen. Ist die Gleichgewichtskonstante für die jeweilige Reaktion bekannt, können diese Gleichgewichtskonzentrationen auch in bekannter Weise anhand des "Massenwirkungsgesetzes" berechnet werden.

In einer offenen Atmosphäre laufen die besagten Gleichgewichtsreaktionen zwar auch ab, das entsprechende Gleichgewicht stellt sich jedoch normalerweise nicht ein, da beispielsweise gasförmige Komponenten in die offene Atmosphäre entweichen können und dadurch dem chemischen Gleichgewicht laufend entzogen werden. Es ist aber bei einer offenen Atmosphäre möglich, durch gezielte Vorgabe der Konzentrationen der an den Gleichgewichtsreaktionen teilnehmenden, gasförmigen Reaktanten, die aufgrund der Gleichgewichtsreaktionen sich einstellenden Konzentrationen anderer Reaktanten zu beeinflussen.

Dadurch, daß bei dem erfindungsgemäßen Verfahren die Erhitzung in einer Atmosphäre erfolgt, in der von dem im chemischen Gleichgewicht zwischen dem Vorprodukt und der Atmosphäre bei der Erhitzungstemperatur vorhandenen, gasförmigen Komponenten ein Reaktionsprodukt mindestens des ersten und des weiteren Dotierstoffes und eine den weiteren aber nicht den ersten Dotierstoff enthaltende Dotierungs-Komponente in vorgebbaren Konzentrationen enthalten sind, ist eine gezielte Einstellung der Konzentration sowohl des ersten als auch des weiteren Dotierstoffs im Vorprodukt möglich. Durch die Vorgabe der Konzentration des gasförmigen Reaktionsprodukts in der Atmosphäre wird das Entweichen dieses gasförmigen Reaktionsprodukts aus dem Vorprodukt und die Bildung des Reaktionsprodukts aus dem ersten und dem weiteren Dotierstoff beeinflußt. Ist beispielsweise die in der Atmosphäre vorgebene Konzentration höher als diejenige Konzentration des Reaktionsprodukts, die sich bei den gegebenen Ausgangs-Konzentrationen des ersten und des weiteren Dotierstoffes im Vorprodukt und in der Atmosphäre und bei den gegebenen Bedingungen im chemischen Gleichgewicht einstellen würde, so wird die Bildung des Reaktionsprodukts aus den entsprechenden Reaktanten und das Entweichen des Reaktionsprodukts aus dem Vorprodukt unterdrückt. Da der erste Dotierstoff ein Bestandteil des Reaktionsprodukts ist, ist es durch die Vorgabe der Konzentration des Reaktionsprodukts auch möglich, die Konzentration des ersten Dotierstoffs im Vorprodukt zu beeinflussen. Gleichermaßen wird dadurch, daß eine den weiteren, aber nicht den ersten Dotierstoff enthaltende Dotierungs-Komponente in der Atmosphäre in vorgebbarer Konzentration enthalten ist, eine gezielte Beeinflussung der Konzentration des weiteren Dotierstoffes im Vorprodukt ermöglicht, und zwar unabhängig davon, ob der weitere Dotierstoff im porösen Teil des Vorprodukts bereits enthalten ist oder nicht. Beispielsweise wird dabei innerhalb physikalisch und chemisch vorgegebener Grenzen konstante Konzentration der übrigen am chemischen Gleichgewicht teilnehmenden Komponenten vorausgesetzt, die Dotierung des porösen Bereichs des Vorprodukts mit dem weiteren Dotierstoff umso höher sein, je höher die Konzentration der Dotierungs-Komponente in der Atmosphäre über dem Konzentrationswert vorgegeben wird, der sich aufgrund einer im Vorporukt bereits enthaltenen Konzentration des weiteren Dotierstoffes anhand der entsprechenden Gleichgewichtsreaktionen in der Atmosphäre im Gleichgewicht einstellen würde.

Die Konzentrationen des Reaktionsprodukts und der Dotierungs-Komponente werden auf dem vorgegebenen Wert gehalten, indem der Atmosphäre der erste und der weitere Dotierstoff an sich oder in Form einer Verbindung zugeführt werden. Es ist beispielsweise möglich, die Dotierstoffe in solchen Formen zuzuführen, die bei der Erhitzungstemperatur zu dem Reaktionsprodukt und/oder zu der Dotierungs-Komponente reagieren.

Da der Atmosphäre das Reaktionsprodukt zugeführt wird, ist die Konzentration des Reaktionsprodukts in der Atmosphäre besonders einfach und genau vorgebbar. Ebenso kann durch die Zuführung der Dotierungs-Komponente zu der Atmosphäre deren Konzentration in der Atmosphäre einfach und genau vorgegeben werden.

In einer ersten Variante des erfindungsgemäßen Verfahrens wird ein $SiO_2$-haltiges Vorprodukt hergestellt, als erster Dotierstoff Phosphor und als weiterer Dotierstoff Fluor eingesetzt, und der Atmosphäre $SiF_4 + PF_5$ zugeführt. Dabei hat es sich als vorteilhaft erwiesen, den Phosphor-dotierten, porösen Bereich des Vorprodukts mittels eines Sol-Gel-Verfahrens herzustellen. Bei der nachträglichen Fluorierung dieses porösen, phosphorhaltigen Vorprodukts besteht die Gefahr der Auslaugung des Phosphors durch die Reaktion mit dem Fluor, wobei sich das gasförmige Reaktionsprodukt $PF_5$ bildet. Zur Kompensation dieser Auslaugung an Phosphor wird der Atmosphäre das Reaktionsprodukt $PF_5$ zugeführt. Gleichzeitig wird das Vorprodukt dadurch, daß der Atmosphäre auch $SiF_4$ zugeführt wird, mit Fluor dotiert bzw. weiter dotiert.

In einer zweiten Verfahrensvariante des erfindungsgemäßen Verfahrens wird ein $SiO_2$-haltiges Vorprodukt hergestellt, als erster Dotierstoff Germanium und als weiterer Dotierstoff Fluor eingesetzt, und der Atmosphäre $SiF_4$ und $GeF_4$ zugeführt. Bei der nachträglichen Fluorierung eines porösen, germaniumhaltigen Vorprodukts besteht die Gefahr der Auslaugung des Germaniums durch die Reaktion mit dem Fluor unter Bildung des gasförmigen Reaktionsproduktes $GeF_4$. Zur Kompensation dieser Auslaugung an Germanium wird der Atmosphäre das Reaktionsprodukt $GeF_4$ zugeführt. Gleichzeitig wird das Vorprodukt dadurch, daß der Atmosphäre auch $SiF_4$ zugeführt wird, mit Fluor dotiert bzw. weiter dotiert.

Es wird ein Verfahren bevorzugt, bei dem das Erhitzen in einer Atmosphäre erfolgt, in der die Konzentrationen des Reaktionsprodukts und der Dotierungs-Komponente so aufrechterhalten werden, wie sie sich in einer bei der Erhitzungstemperatur im chemischen Gleichgewicht mit dem Vorprodukt stehenden, geschlossenen Atmosphäre einstellen, wenn in dem Vorprodukt der erste und der weitere Dotierstoff in der für sie jeweils einzustellenden Konzentration enthalten sind. Dadurch werden die Gleichgewichtsreaktionen, die zwischen den gasförmigen Komponenten und den im porösen Bereich des Vorprodukts vorhandenen Komponenten ablaufen, derart beeinflußt, daß sich im Vorprodukt die für den jeweiligen Dotierstoff gewünschte Konzentration einstellt. Dadurch kann beispielsweise, unabhängig von der für den weiteren Dotierstoff einzustellenden Konzentration, die Konzentration des ersten Dotierstoffes auf dem Wert gehalten werden, der ursprünglich im porösen Bereich des Vorprodukts eingestellt war.

Als besonders geeignet für eine gezielte Beeinflussung der Konzentrationen der Dotierstoffe in dem Vorprodukt hat sich ein Verfahren erwiesen, bei dem der Atmosphäre das Reaktionsprodukt und die Dotierungs-Komponente in solchen Konzentrationen zugeführt werden, wie sie sich in einer, bei der Erhitzungstemperatur im chemischen Gleichgewicht mit dem Vorprodukt stehenden, geschlossenen Atmosphäre einstellen, wenn in dem Vorprodukt der erste und der weitere Dotierstoff in der für sie jeweils einzustellenden Konzentration enthalten sind. Anhand der bekannten chemischen Gleichgewichtsreaktionen, die bei der Erhitzungstemperatur zwischen den in der Atmosphäre und den im porösen Bereich des Vorprodukts vorhandenen Komponenten ablaufen sowie den entsprechenden ebenfalls bekannten oder leicht zu ermittelnden thermodynamischen Daten, lassen sich auf bekannte Art und Weise leicht die Konzentrationen des gasförmigen Reaktionsprodukts und der Dotierungs-Komponente in der Gasphase ermitteln, die sich in einer geschlossenen Atmosphäre einstellen würden, wenn in dem Vorprodukt der erste und der weitere Dotierstoff in der für sie jeweils einzustellenden Konzentration enthalten wären. Dadurch, daß die Konzentrationen des Reaktionsproduktes und der Dotierungs-Komponente in der Atmosphäre in genau diesen Konzentrationen vorgegeben und in diesen Konzentrationen zugeführt werden, wird gewährleistet, daß sich in dem Vorprodukt die Konzentrationen der Dotierstoffe in der für sie jeweils einzustellenden Konzentration tatsächlich einstellen.

Das erfindungsgemäße Verfahren eignet sich gleichermaßen für die Herstellung von $SiO_2$-haltigen Gläsern aus Vorprodukten, die in einem porösen Bereich mit einem ersten Dotierstoff vordotiert sind und in den nachträglich über die Gasphase ein weiterer Dotierstoff oder mehrere weitere Dotierstoffe eingebracht werden sollen und wobei der oder die Dotiestoffe mit dem ersten Dotierstoff unter Bildung eines gasförmigen Reaktionsprodukts bzw. gasförmiger Reaktionsprodukte reagieren, und diesen dabei aus dem Vorprodukt auslaugen. Das Verfahren hat sich beispielsweise bewährt für die Herstellung von dotiertem Glas, aus einem Vorprodukt, das als ersten Dotierstoff Bor, Aluminium, Gallium, Germanium, Zinn, Blei, Phosphor, Antimon und/oder Titan enthält.

Es wird ein Verfahren bevorzugt, bei dem das Vorprodukt während der Erhitzung zu dem Glas gesintert wird. Durch das Sintern zu einem dichten Glas wird sichergestellt, daß die im Verlauf der Erhitzung innerhalb des Glases eingestellten Dotierstoff-Konzentrationen und die Verteilung der Dotierstoffe innerhalb des Vorprodukts auch nach dem Abkühlen im wesentlichen erhalten bleibt. Auch bei einer späteren Temperatur- oder Gasbehandlung des Glases muß eine wesentliche Veränderung der einmal eingestellten Dotierstoff-Verteilung und/oder -Konzentration nicht befürchtet werden.

Das erfindungsgemäße Verfahren wird nachfolgend anhand eines Ausführungsbeispiels näher erläutert:

Auf der äußeren Oberfläche eines rohrförmigen Ausgangskörpers aus reinem Quarzglas wird mittels des bekannten Soot-Verfahrens eine Schicht aus porösem Quarzglas abgeschieden, wobei während der Abscheidung eine $B_2O_3$-Konzentration von 10 Mol-% eingebracht wird. In einem anschließenden Dotierschritt wird der poröse Bereich des so hergestellten Vorprodukts mit Fluor dotiert, wobei die Bor-Konzentration (bzw. die damit korrelierte $B_2O_3$-Konzentration) im Vorprodukt konstant gehalten werden soll. Dazu wird das Vorprodukt in einem Ofen erhitzt und dabei einer Atmosphäre ausgesetzt, in die ein Gasgemisch aus $SiF_4$ und $BF_3$ geleitet wird. Ausgehend von der zu haltenden Ausgangs-Konzentration für $B_2O_3$ von 10 Mol-% und einer einzustellenden Fluor-Konzentration entsprechend 1,4 mol-% $SiO_{1,5}F$ im porösen Bereich des Vorprodukts, wird die in die Atmosphäre geleitete $BF_3$-Gasmenge sowie die $SiF_4$-Gasmenge gerade so bemessen, daß in der Atmosphäre derartige Konzentrationen dieser Verbindungen enthalten sind, wie sie sich in einer bei der Erhitzungstemperatur im chemischen Gleichgewicht mit dem Vorprodukt stehenden, geschlossenen Atmosphäre einstellen würden, wenn in dem Vorprodukt $B_2O_3$ in einer Konzentration von 10 mol-% und Fluor in einer Konzentration entsprechend 1,4 mol-% $SiO_{1,5}F$ enthalten wären. Entsprechend dem chemischen Gleichgewicht

$$3\ SiF_4 + 2\ B_2O_3 \rightleftharpoons 4\ BF_3 + 3\ SiO_2$$

werden hierfür in die Atmosphäre $SiF_4$ und $BF_3$ eingeleitet und dabei die Partialdrucke so eingestellt, daß ein Molenbruch-Verhältnis von $X(BF_3)/X(SiF_4)$ von 3, bei einem durch die beiden Gase erzeugten Gesamtdruck von 1 atm aufrechterhalten wird.

In der so erzeugten Atmosphäre wird das Vorprodukt bei einem Druck von 1 atm und einer Erhitzungstemperatur von 800°C eine Stunde lang gehalten und anschließend im gleichen Ofen auf eine Temperatur von 1.300°C erhitzt und dabei der poröse Bereich des Vorprodukts verglast.

Der so hergestellte Quarzglaskörper besteht aus einem Kernmaterial aus reinem Quarzglas und einem Mantelmaterial aus einem Quarzglas, das mit 10 mol-% $B_2O_3$ und mit Fluor entsprechend 1,4 mol-% $SiO_{1,5}F$ dotiert ist. Durch das erfindungsgemäße Verfahren wird die ursprünglich im Vorprodukt eingestellte $B_2O_3$-Konzentration im Verlaufe der Fluordotierung über die Gasphase nicht verringert. Zwischen dem Kernmaterial und dem Mantelmaterial konnte damit eine Brechzahldifferenz von 0,012 erreicht werden.

Zum Vergleich wurden weitere, ebenfalls mit 10 mol-% $B_2O_3$ dotierte Vorprodukte hergestellt und anschließend in einer fluorhaltigen Atmosphäre unter gleichen Bedingungen behandelt, wobei jedoch der Atmosphäre nicht ein Gemisch von $BF_3$ und $SiF_4$ zugeführt wurde, sondern nur $SiF_4$. Die zugeführte $SiF_4$-Menge wurde dabei so eingestellt, daß sich in der Atmosphäre eine zu dem oben angegebenen Ausführungsbeispiel äquivalente Fluor-Konzentration einstellte. Unter diesen Bedingungen wurde das im porösen Vorprodukt enthaltene Bor durch die Gasphasen-Fluordotierung ausgelaugt. In Abhängigkeit von der Dauer der Fluordotierung wurden gegenüber der Ausgangs-Konzentration reduzierte $B_2O_3$-Konzentrationen im Quarzglas gemessen. Die Brechzahl-Absenkung des mit Fluor und $B_2O_3$ dotierten Mantelglases gegenüber dem undotierten Quarzglas war in keinem Fall größer als 0,0095.

## Patentansprüche

1. Verfahren zur Herstellung von Glas, insbesondere Quarzglas, das mit mehreren, seinen Brechungsindex unterschiedlich verändernden Dotierstoffen dotiert ist, wobei ein erster Dotierstoff bei der Herstellung eines wenigstens im zu dotierenden Bereich porösen, $SiO_2$-haltigen Vorprodukt des Glases eingebracht und danach das den ersten Dotierstoff enthaltende Vorprodukt in einer, einer weiteren Dotierstoff enthaltenden Atmosphäre erhitzt wird, in der von den im chemischen Gleichgewicht zwischen dem Vorprodukt und der Atmosphäre bei der Erhitzungstemperatur vorhandenen gasförmigen Komponenten ein Reaktionsprodukt mindestens des ersten und des weiteren Dotierstoffes und eine den weiteren aber nicht den ersten Dotierstoff enthaltende Dotierungs-Komponente enthalten sind, wobei als weiterer Dotierstoff Fluor eingesetzt wird, und wobei das Vorprodukt zu dem Glas gesintert wird, dadurch gekennzeichnet, daß als erster Dotierstoff Phosphor oder Germanium eingesetzt und der Atmosphäre im erstgenannten Fall $SiF_4$ und $PF_5$ und im zweitgenannten Fall $SiF_4$ und $GeF_4$ zugeführt werden und darin in vorgebbaren Konzentrationen enthalten sind.

2. Verfahren nach Anspruch 1, dadurch gekennzeichnet, daß das Erhitzen in einer Atmosphäre erfolgt, in der die Konzentrationen des Reaktionsproduktes und der Dotierungs-Komponente so aufrechterhalten werden, wie sie sich in einer, bei der Erhitzungstemperatur im chemischen Gleichgewicht mit dem Vorprodukt stehenden, geschlossenen Atmosphäre einstellen, wenn in dem Vorprodukt der erste und der weitere Dotierstoff in der für sie jeweils einzustellenden Konzentration enthalten sind.

3. Verfahren nach Anspruch 1 oder 2, dadurch gekennzeichnet, daß der Atmosphäre das Reaktionsprodukt und die Dotierungs-Komponente in solchen Konzentrationen zugeführt werden, wie sie sich in einer, bei der Erhitzungstemperatur im chemischen Gleichgewicht mit dem Vorprodukt stehenden, geschlossenen Atmosphäre einstellen, wenn in dem Vorprodukt der erste und der weitere Dotierstoff in der für sie jeweils einzustellenden Konzentration enthalten sind.

4. Verfahren nach einem oder mehreren der Ansprüche 1 bis 3, dadurch gekennzeichnet, das das Vorprodukt während der Erhitzung zu dem Glas gesintert wird.

## Claims

1. Process for the production of glass, in particular quartz glass, which is doped with several dopants which change its refractive index differently, the first dopant being introduced during the production of an $SiO_2$-containing glass precursor which is porous at least in the region to be doped, and the precursor containing the first dopant is then heated in an atmosphere which contains a further dopant and in which, among the gaseous components present in the chemical equilibrium between the precursor and the atmosphere at the heating temperature, a reaction product of at least the first dopant and of the further dopant and a doping component containing the further dopant but not the first dopant are contained, fluorine being used as the further dopant and the precursor being sintered to give the glass, characterized in that phosphorus or germanium is used as the first dopant and $SiF_4$ and $PF_5$ are fed to the atmosphere in the first-mentioned case and $SiF_4$ and $GeF_4$ in the second-mentioned case and are contained therein in predeterminable concentrations.

2. Process according to Claim 1, characterized in that the heating is carried out in an atmosphere in which the concentrations of the reaction product and of the doping component are maintained so that they are the same as those established in a closed atmosphere in chemical equilibrium with the precursor at the heating temperature if the precursor contains the first dopant and the further dopant in the concentration to be established for each of them.

3. Process according to Claim 1 or 2, characterized in that the reaction product and the doping component are fed to the atmosphere in concentrations that are the same as those established in a closed atmosphere in chemical equilibrium with the precursor at the heating temperature if the precursor contains the first dopant and the further dopant in the concentration to be established for each of them.

4. Process according to one or more of Claims 1 to 3, characterized in that the precursor is sintered to give the glass during the heating.

**Revendications**

1. Procédé de fabrication de verte, en particulier de verte de quartz, qui est dopé avec plusieurs substances dopantes qui modifient de manière diverse son indice de réfraction, dans lequel une première substance dopante est introduite au cours de la fabrication d'un produit intermédiaire du verte contenant $SiO_2$, poreux au moins dans le domaine à doper, après quoi le produit intermédiaire contenant la première substance dopante est chauffé dans une atmosphère contenant une autre substance dopante dans laquelle sont contenus, parmi les composants gazeux présents en équilibre chimique entre le produit intermédiaire et l'atmosphère à la température de chauffage, un produit réactionnel d'au moins la première substance dopante et de l'autre substance dopante et un composant de dopage contenant l'autre substance dopante mais pas la première substance dopante, le fluor étant utilisé comme autre substance dopante, et le produit intermédiaire étant fritté en le verre, caractérisé en ce que du phosphore ou, du germanium est utilisé comme première substance dopante et, dans le premier cas, $SiF_4$ et $PF_5$ sont introduits dans l'atmosphère et, dans le deuxième cas, $SiF_4$ et $GeF_4$ sont introduits dans l'atmosphère et y sont contenus en des concentrations qui peuvent être déterminées au préalable.

2. Procédé selon la revendication 1, caractérisé en ce que le chauffage a lieu dans une atmosphère dans laquelle les concentrations du produit réactionnel et du composant de dopage sont maintenues aux valeurs auxquelles elles s'établissent dans une atmosphère fermée en équilibre chimique avec le produit intermédiaire à la température de chauffage lorsque la première substance dopante et l'autre substance dopante sont contenues dans le produit intermédiaire en la concentration qui doit être établie dans chaque cas pour elles.

3. Procédé selon la revendication 1 ou 2, caractérisé en ce que le produit réactionnel et le composant de dopage sont introduits dans l'atmosphère en des concentrations telles que celles qui s'établissent dans une atmosphère fermée en équilibre chimique avec le produit intermédiaire à la température de chauffage lorsque la première substance dopante et l'autre substance dopante sont contenues dans le produit intermédiaire en la concentration qui doit être établie dans chaque cas pour elles.

4. Procédé selon une ou plusieurs des revendications 1 à 3, caractérisé en ce que le produit intermédiaire est fritté en le verre au cours du chauffage.